# EUROPEAN PATENT SPECIFICATION

(11) **EP 1 727 340 B1**
(45) Date of publication and mention of the grant of the patent: **20.08.2014**
(21) Application number: 06380104.7
(22) Date of filing: 08.05.2006
(51) Int. Cl.: H04M 3/56, H04M 3/53, H04M 3/42

(54) **Real-time telephone conversation transcription system and method**
System und Verfahren zur Echtzeit-Transkription eines Telefongesprächs
Système et procédé pour la transcription en temps réel d'une communication téléphonique

(30) Priority: 24.05.2005 ES 200501257
(43) Date of publication of application: 29.11.2006
(73) Proprietor: Vodafone Group PLC, Newbury Berkshire RG14 2FN (GB); Vodafone Espana, S.A., 28108 Alcobendas, Madrid (ES)
(72) Inventor: Touset Rios, Miguel Angel, 28025 Madrid (ES)
(74) Representative: Boult Wade Tennant

(56) References cited:
- WO-A-03/096662
- FR-A1- 2 846 826
- US-A- 5 712 901
- US-A1- 2004 083 105
- US-A1- 2005 021 344
- US-B1- 6 816 468
- US-B1- 6 850 609

## Description

### Field of the Invention

The present invention is encompassed within the field of mobile telecommunications, and more specifically in the sending of data corresponding to a voice call between two or more mobile telephones.

### Background of the Invention

The current state of the art provides devices that are able to transcribe into text a flow of conversation in quasi-real-time. There are also systems that capture a "dictated" text, transforming speech into alphanumerical characters.

There are likewise systems capable of separating the voice of the different speakers participating in a conversation or dialogue.

In other proposed systems, such as US patent application US-2005/0013419- A1 for example, storing a text dictated by a speaker to later send it through different messaging services, such as SMS or e-mail, is proposed. In Australian patent application WO 03/071774-A1, a method is proposed for carrying out a conference call between two or more participants. It is a system for packet networks in which a central node on which the conference is set up is required. FR2846826 is a document that describes a transcription technique between speakers on mobile terminals.

It is Known that abbreviations and acronyms are frequently used in the field of mobile telephony. A glossary of acronyms/terms that are used throughout this specification is set forth below:
DTMF : Dual Tone Multi-Frequency
HLR : Home Location Register
MSC : Mobile Switching Centre
MSISDN : Mobile Station International ISDN Number
SCP : Service Control Point
SIP : Session Initiation Protocol
SMS : Short Message Service
SMSC : Short Message Service Centre
URL : Universal Resource Locator
USSD : Unstructured Supplementary Service Data

>

### Description of the Invention

The invention relates to a real-time telephone conversation transcription system according to claim 1, and to a method according to claim 11. Preferred embodiments of the system and of the method are defined in the dependent claims.

The present invention provides a system, unlike those known in the state of the art, which allows real-time transcription of a conversation occurring between two mobile terminals and maintaining the speech communication active. According to the features of the system of the invention, this on-demand call transcription or subtitling service (as the subscriber activates and deactivates the service at will) can be requested at the beginning of or during a voice call, without requiring that all the calls being made by the subscriber pass through a central node. The voice samples of each subscriber are obtained from processing the voice included in the conversation.

According to a first aspect of the invention, the latter relates to a real-time transcription system for transcribing a telephone call between first and second mobile terminals (A, B), comprising:
- means for receiving a transcription service activation signal from one of the two mobile terminals,
- and in response to said activation, means for receiving a joint speech signal including the voices of said first and second mobile terminals,
- means for separating said conversation in real-time and obtaining independent first and second speech signals from said first and second mobile terminals,
- means for transcribing said first and second speech signals into a unique pre-established format,
- means of sending said first and second speech signals transcribed into a unique pre-established format to the mobile terminal (A or B) that requested the service.

Said means for receiving the joint speech signal are managed directly by the mobile terminal requesting the service, or they can be managed by a control node of the mobile telephony network.

Said unique pre-established format can be determined by the technical features of the terminal requesting the transcription service, or by the subscriber requesting the service or by the network.

Said unique pre-established format can be text, image or others.

Said means of sending said transcribed first and second speech signals preferably include means of connecting with a Short Message Service Center (SMSC) for sending by means of SMS. Or they preferably include means of connecting with a USSD gateway (USSD GW) and a subscriber Home Location Register (HLR). Or preferably said transcribed first and second speech signals are included in a data session.

The system preferably comprises means for receiving a transcription service deactivation signal.

According to a second aspect of the invention, the latter relates to a real-time transcription method for transcribing a telephone conversation between first and second mobile terminals (A, B) comprising:
- one of the two mobile terminals sending a transcription service activation signal,
- and in response to said activation, receiving a joint speech signal including the voices of said first and second mobile terminals,
- separating said conversation in real-time and obtaining independent first and second speech signals from said first and second mobile terminals,
- transcribing said first and second speech signals into a unique pre-established format,
- sending said first and second speech signals transcribed into unique pre-established format to the mobile terminal (A or B) that requested the service.

Said joint speech signal can be managed directly by the mobile terminal requesting the service, or by a control node of the mobile telephony network.

Sending the first and second speech signals transcribed into a unique pre-established format can be done by means of SMS, or by means of a USSD session generated by the network, or by means of a data session (as is the case when a mobile terminal is involved and it is a class A terminal).

Activation of the service can be requested by sending a predetermined DTMF tone, or by sending a predetermined USSD code, or by means of SMS, or by means of a data session. For example, in phase 3 CAMEL, the SMS are able to activate an intelligent network service. Or activation of the service can be done by means of requesting the identity of the transcription system of the invention (e.g. MSISDN or SIP URL).

Activation of the service can also be requested by voice. In said case of voice activation, in addition to obtaining independent first and second speech signals from said first and second mobile terminals, the system recognizes which one corresponds to each, and therefore only the first or second speech signal corresponding to the other mobile terminal that did not request the service, transcribed into a unique pre-established format or formats, is sent to the mobile terminal that requested the service.

The method preferably includes a transcription service deactivation signal. This service deactivation would be done in a manner similar to that indicated for service activation.

It may also occur that the terminal that requested the service receives in a first approximation the complete transcription of the conversation, and then selects the part that is desired to be sent. If activation is done by voice, the voice itself can be used to know who activated the service to be able to send him or her only the transcription of the other one.

It can also be considered that once the system of the invention is receiving the joint speech signal including the voices of said first and second mobile terminals, the subscriber requesting the service can be distinguished with a pre-established identifier (DTMF tone, USSD code, SMS, voice sample or others) in order to thus send to him or her only the transcription of the other terminal.

Said unique pre-established format can be determined by the subscriber requesting the transcription service, or by the technical features of the terminal, or by the network.

The system proposed by the invention can be scaled to the case in which there are N speakers (N>=2) and the N speakers requested the service, since while maintaining the established voice connection, parts of the conversation of the N speakers could be passed to text, which would consecutively be shown on the display of the subscriber requesting the service.

The system can be applied to any type of terminals, whether they are mobile or fixed terminals, PCs, Palms, etc., which have a display element that can be accessed during a telephone conversation.

On the other hand, the system can be extended to the case of real-time translation, by simply translating the text obtained from the conversation into another language, which can be selected when requesting the service. And more generally, due to the fact that a voice channel is open with the subscriber of the mobile terminal that requested the transcription service, the translated audio could be included by said channel. For example, if a subscriber wants to know how to pronounce and write a given phrase in another language, he or she must simply request the service (calling a number B predetermined by the operator, for example, and in this case the system of the invention has means for it to be directly translated), say the phrase and see its translation in text on the display of his or her terminal and hear the pronunciation thereof in the receiver. In this case, N=1.

In addition to being in text format, it can also occur that the information shown to the subscriber is in multimedia format (in which case a data link is used to show the processed information, or MMS are used). For example, the sentences pronounced by B, or images related to the conversation (sign language) or others, can be added to an image of the other person stored in the terminal of A, as in comic strips. These latter options require an additional function in network elements in order to make them reach the terminal, typically through a data channel, as well as in the terminal that must process this data and shown it on the display according to the service specifications.

### Brief Description of the Drawings

A series of drawings which aid in better understanding the invention and which are expressly related with an embodiment of said invention, presented as a non-limiting example thereof, are very briefly described below.

Figure 1 shows a possible implementation of the system of the invention by means of an intelligent network.

Figure 2 shows another possible implementation of the system of the invention by means of logic in the mobile terminal.

### Description of a Preferred Embodiment of the Invention

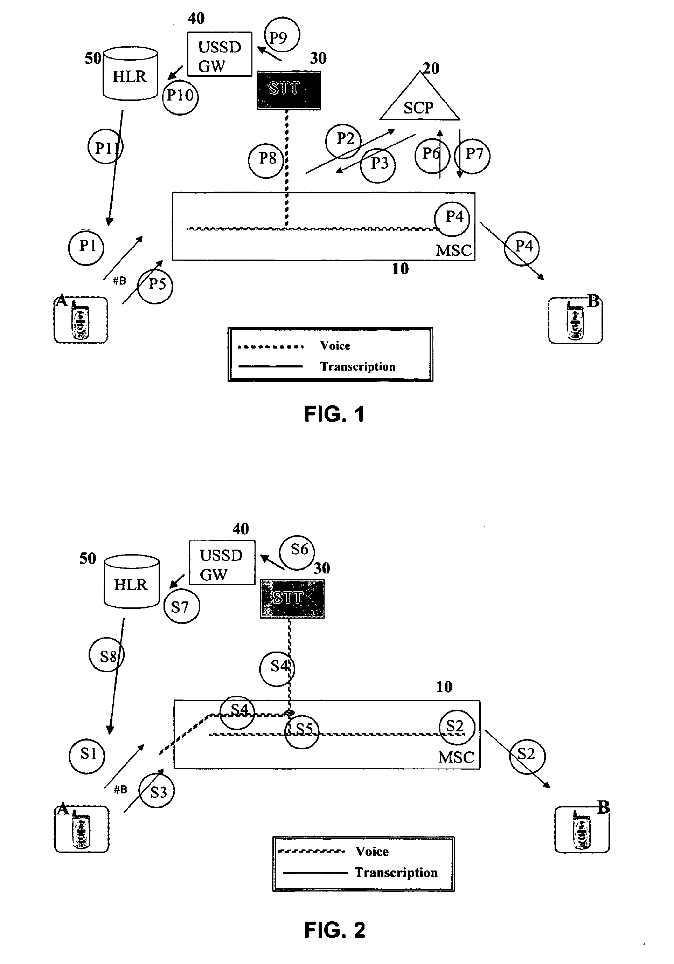

Both in the implementation shown in Figure 1 and in the one shown in Figure 2, there is a voice call between two subscribers of mobile terminals A and B. During the course of said call, one of them, for example speaker A, can decide (because he or she requires a translation or transcription of the conversation or simply because he or she is deaf) that he or she prefers that the way of interacting with the other speaker is enriched by means of showing the transcription of the conversation on the display of his or her terminal.

Likewise, if the environment that one of the speakers is in, for example A, exceeds a noise threshold that can be configured in the speaker's terminal, the terminal will request the conversation transcription service.

According to the invention and in the manner described below (implementations in intelligent networks or by means of logic in the mobile terminal), the requesting speaker A will receive the voice and transcription thereof in the terminal, whereas the other speaker B will maintain the voice interface. The call existing at first is maintained and the speaker A requesting the service will also receive in real-time the transcription of the conversation as if it were a subtitle.

Figure 1 shows the intelligent network-based implementation, i.e. the case in which setting the node responsible for receiving the audio of the conversation for transcription thereof in listening mode is managed by the communications network.

The process the service would go through is as follows:
P1. Subscriber A in this case indicates to the network that he or she wishes to set up a voice call to his or her homologue B.
P2. The arrival of the request to the switching node (MSC) 10 causes the intelligent network to trigger a control node (SCP) 20 therein so that the latter indicates how to proceed in setting up the call.
P3. The SCP control node 20 returns control of the call to the MSC switching node 10, indicating that it must set up the call with subscriber B.
P4. The MSC switching node 10 puts subscribers A and B in communication. Therefore, the voice call between them is set up. A and B receive voice.
P5. Subscriber A (or his or her terminal when a noise level is detected that is above a threshold) wishes to request the conversation transcription service for the ongoing conversation. To that end it sends a certain DTMF tone or USSD code to the network, or requested, for example, by means of voice command or by means of an SMS. Or by means of requesting identity of the node 30 (for example MSISDN).
P6. This causes the SCP control node 20 to be "woken up" given one of the previously triggered events.
P7. The logic running in the SCP control node 20 returns that for this DTMF tone or USSD code the MSC switching node 10 sets up a call between speaker A and the processing node of the speech signal pertaining to the call between A and B (STT node 30). This causes the call between A and B to be momentarily placed on hold.
P8. The STT node 30 is placed in conference with A and B by indication of the SCP control node.
P9. At this time, the STT node 30 listens to the conversation between A and B. The first task of the STT node 30 is to separate the voice samples of each speaker to then process each one of them and convert them into text. The resulting text will be sent to the speaker requesting the service, A, by means of a type 0 SMS for example (i.e. they are not stored in the memory of the terminal), USSD session generated by the network, or data session (as is the case when subscriber A's mobile terminal is an A class terminal). In the case of using the USSD session, the STT node 30 passes the transcribed text from each one of the speakers to the HLR 50 after passing through a USSD gateway (USSD GW) 40.
P10. The HLR 50 is used in delivering the USSD message (or SMS or data session creation).
P11. Subscriber A receives the conversation transcription by means of the USSD session generated by the network. Therefore, A will receive audio and transcription and B will only receive audio.

The subscriber may request which part of the conversation he or she wants to receive transcribed, interacting with the STT node 30 in the USSD session set up or by requesting it for example by means of voice command; or by means of DTMF tones processed by the SCP control node 20 and interacting between the SCP control node 20 and the STT node 30 by means of an external link. In the same manner, subscriber A or his or her terminal can indicate to the network that he or she wishes to abandon the transcription service.

Figure 2 shows the implementation by means of logic in the mobile terminal, i.e. the case in which putting the node responsible for receiving the audio of the conversation for transcription thereof in the listening mode is managed by the mobile terminal itself.

In this case, the process the service would go through is as follows:
S1. Subscriber A indicates to the network that he or she wishes to set up a call with his or her homologue B.
S2. The voice call between A and B is set up in the switching node (MSC) 10. A and B receive voice.
S3. The terminal decides to request the call transcription service (for example because it detects a noise level in the environment that is above a threshold). Or subscriber A decides him or herself to request the service (for example by pushing a button or selecting a function in the menu of the terminal or by means of a voice command).
S4. The terminal sets up a voice call with the STT node 30. So the call between A and B will momentarily be on HOLD.
S5. The terminal puts the STT node 30 in conference. Therefore, A, B and STT will receive audio of the conversation between A and B.
S6. As in the implementation shown in Figure 1, the first task of the STT node 30 is to separate the voice samples of each speaker to then process each one of them and convert it into text. The resulting text is sent to A, for example, by means of a 0-type SMS (i.e. they are not stored in the memory of the terminal), USSD session generated by the network, or data session (as in the case in which the mobile terminal of subscriber A was a class A terminal). In the case of using the USSD session, the STT node will pass the transcribed text of each one of the speakers to the HLR 50 after passing through a USSD gateway (USSD GW) 40.
S7. The HLR 50 is used in delivering the USSD message (or SMS or data session creation).
S8. Subscriber A receives the conversation transcription by means of the USSD session generated by the network. Therefore, A will receive audio and the transcription and B will receive only audio.

The subscriber may request which part of the conversation he or she wants to receive transcribed, interacting with the STT node 30 in the USSD session set up or DTMF tones processed by the STT node or by requesting it by voice or SMS. In the same manner, subscriber A or his or her terminal can indicate to the network that he or she wishes to abandon the transcription service.

Although the present invention has been described for mobile telephony networks, it would also be applicable to fixed telephony networks or computer networks, such as for example for conversations through Internet between two PCs.

## Claims

1. A real-time transcription system for transcribing a telephone conversation between first and second mobile terminals (A, B) in a communications network, comprising:
- means (10) for receiving a transcription service activation signal from one of the two mobile terminals (A, B),
- and in response to said activation signal, means (30) for receiving a joint speech signal including the voices of said first and second mobile terminals,
- means (30) for separating said conversation in real-time and obtaining independent first and second speech signals from said first and second mobile terminals (A, B).
- means (30) for transcribing said first and second speech signals into a pre-established format,
- means (40; 50) of sending said transcribed first and second speech signals to the mobile terminal (A or B) that requested the service, such that the transcribed speech signals are sent by means of an Unstructured Supplementary Service Data, USSD, session established by the network (P11).

2. A system according to claim 1, **characterized in that** said means 10 for receiving the joint speech signal are managed directly by the mobile terminal (A) requesting the service.

3. A system according to claim 1, **characterized in that** said means (10) for receiving the joint speech signal are managed by a control node (20) of the mobile telephony network.

4. A system according to any of the previous claims, **characterized in that** said pre-established format is determined by the technical features of the terminal (A) requesting the transcription service.

5. A system according to any of claims 1-3, **characterized in that** said pre-established format is determined by the subscriber requesting the service.

6. A system according to any of claims 1-3, **characterized in that** said pre-established format is determined by the network.

7. A system according to any one preceding claims wherein the means (10) for receiving a transcription service activation signal is configured to receive a predetermined USSD code as the transcription service activation signal.

8. A system according to any of claims 1-7, **characterized in that** said means (40; 50) of sending said transcribed first and second speech signals include means of connecting with a USSD gateway, USSD GW (40) and a subscriber Home Location Register, HLR, (50).

9. A system according to any of the previous claims, **characterized in that** it further comprises means 10 for receiving a transcription service deactivation signal.

10. A real-time transcription method for transcribing a telephone conversation between first and second mobile terminals (A, B) in a communications network, comprising:
- one of the two mobile terminals sending a transcription service activation signal (P1 ; S1),
- and in response to said activation signal, receiving a joint speech signal including the voices of said first and second mobile terminals (P8; S4),
- separating said conversation in real-time and obtaining independent first and second speech signals from said first and second mobile terminals,
- transcribing said first and second speech signals into a established format,
- sending said transcribed first and second speech signals to the mobile terminal (A or B) that requested the service, such that the transcribed speech signals are sent by means of an Unstructured Supplementary Service Data, USSD, session established by the network (P10, P11; S7, S8).

11. A method according to claim 10, **characterized in that** said joint speech signal is managed directly by the mobile terminal that requested the service.

12. A method according to claim 10, **characterized in that** said joint speech signal is managed by a control node (20) of the mobile telephony network.

13. A method according to anyone of claims 10 to 12 wherein the transcription service activation signal (P1 ; S1) is a redetermined USSD code.

14. A method according to any of claims 10-13, **characterized in that** once the joint speech signal including the voices of said first and second mobile terminals is received, the subscriber requesting the service is distinguished by means of a pre-established identifier, and only the first or second speech signal corresponding to the other mobile terminal (B or A), transcribed and sent to the subscriber.

15. A method according to any of claims 10-14, **characterized in that** the subscriber requesting the service is who determines said pre-established format.

16. A method according to any of claims 10-14 **characterized in that** the features of the mobile terminal requesting the transcription service determines said pre-established format.

17. A method according to any of claims 10-14, **characterized in that** the network determines said pre-established format.

18. A method according to any of claims 10-17, **characterized in that** it includes sending a transcription service deactivation signal.

## Patentansprüche

1. Echtzeit-Transkriptionssystem zur Transkription eines Telefongesprächs zwischen einem ersten und zweiten Mobilendgerät (A, B) in einem Kommunikationsnetzwerk,
wobei das System Folgendes umfasst:
- Mittel (10) zum Empfangen eines Transkriptionsdienst-Aktivierungssignals von einem der beiden Mobilendgeräte (A, B),
- und als Reaktion auf das Aktivierungssignal Mittel (30) zum Empfangen eines gemeinsamen Sprachsignals, das die Stimmen des ersten und zweiten Mobilendgeräts umfasst,
- Mittel (30) zum Trennen der Konversation in Echtzeit und Erlangen von unabhängigen ersten und zweiten Sprachsignalen von dem ersten und zweiten Mobilendgerät (A, B),
- Mittel (30) zur Transkription des ersten und zweiten Sprachsignals in einem vorgegebenen Format,
- Mittel (40, 50) zum Senden des transkribierten ersten und zweiten Sprachsignals zu dem Mobilendgerät (A oder B), das den Dienst angefordert hat, so dass die transkribierten Sprachsignale mittels einer Sitzung für unstrukturierte Zusatzdienstdaten (Unstructured Supplementary Service Data, USSD) durch das Netzwerk (P11) gesendet werden.

2. System nach Anspruch 1, **dadurch gekennzeichnet, dass** die Mittel (10) zum Empfangen des gemeinsamen Sprachsignals direkt von dem Mobilendgerät (A) verwaltet werden, das den Dienst angefordert hat.

3. System nach Anspruch 1, **dadurch gekennzeichnet, dass** die Mittel (10) zum Empfangen des gemeinsamen Sprachsignals von einem Steuerknoten (20) des Mobilfunknetzwerks verwaltet werden.

4. System nach einem der vorhergehenden Ansprüche, **dadurch gekennzeichnet, dass** das vorher festgelegte Format von den technischen Merkmalen des Endgeräts (A) bestimmt wird, das den Transkriptionsdienst anfordert.

5. System nach einem der Ansprüche 1 bis 3, **dadurch gekennzeichnet, dass** das vorher festgelegte Format von dem Teilnehmer bestimmt wird, der den Dienst anfordert.

6. System nach einem der Ansprüche 1 bis 3, **dadurch gekennzeichnet, dass** das vorher festgelegte Format von dem Netzwerk bestimmt wird.

7. System nach einem der vorhergehenden Ansprüche, wobei das Mittel (10) zum Empfangen eines Transkriptionsdienst-Aktivierungssignals dafür konfiguriert ist, einen vorgegebenen USSD-Code als Transkriptionsdienst-Aktivierungssignal zu empfangen.

8. System nach einem der Ansprüche 1 bis 7, **dadurch gekennzeichnet dass** das Mittel (50 40) zum Senden des ersten und zweiten transkribierten Sprachsignals Mittel zur Verbindung mit einem USSD-Gateway, USSD GW (40), und einem Teilnehmer-Heimortregister (Home Location Register - HLR) (50) umfasst.

9. System nach einem der vorhergehenden Ansprüche, **dadurch gekennzeichnet, dass** es ferner Mittel (10) zum Empfangen eines Transkriptiondienst-Deaktivierungssignals umfasst.

10. Echtzeit-Transkriptionsverfahren zur Transkription eines Telefongesprächs zwischen dem ersten und zweiten Mobilendgerät (A, B) in einem Kommunikationsnetzwerk, wobei das Verfahren Folgendes umfasst:
- eines der beiden Mobilendgeräte sendet ein Transkriptionsdienst-Aktivierungssignal (P1, S1),
- und als Reaktion auf das Aktivierungssignal Empfangen eines gemeinsamen Sprachsignals, das die Stimmen des ersten und zweiten Mobilendgeräts (P8; S4) umfasst,
- Trennen der Konversation in Echtzeit und Erhalten von unabhängigen ersten und zweiten Sprachsignalen von dem ersten und zweiten Mobilendgerät,
- Transkription des ersten und zweiten Sprachsignals in einem vorgegebenen Format,
- Senden des transkribierten ersten und zweiten Sprachsignals zu dem Mobilendgerät (A oder B), das den Dienst angefordert hat, so dass die transkribierten Sprachsignale mittels einer Sitzung für unstrukturierte Zusatzdienstdaten (Unstructured Supplementary Service Data, US SD) durch das Netzwerk (P10, P11; S7, S8) gesendet werden.

11. Verfahren nach Anspruch 10, **dadurch gekennzeichnet, dass** das gemeinsame Sprachsignal direkt von dem Mobilendgerät verwaltet wird, das den Dienst angefordert hat.

12. Verfahren nach Anspruch 10, **dadurch gekennzeichnet, dass** das gemeinsame Sprachsignal durch einen Steuerknoten (20) des Mobilfunknetzwerks verwaltet wird.

13. Verfahren nach einem der Ansprüche 10 bis 12, wobei das Transkriptionsdienst-Aktivierungssignal (P1; S1) ein vorgegebener USSD-Code ist.

14. Verfahren nach einem der Ansprüche 10 bis 13, **dadurch gekennzeichnet, dass** nach dem Empfang des gemeinsamen Sprachsignals, das die Stimmen des ersten und zweiten Mobilendgeräts umfasst, der Teilnehmer, der den Dienst anfordert, mit Hilfe einer vorher festgelegten Kennung unterschieden wird, und nur das erste oder zweite Sprachsignal, das zu dem anderen Mobilendgerät (B oder A) gehört, transkribiert und zu dem Teilnehmer gesendet wird.

15. Verfahren nach einem der Ansprüche 10 bis 14, **dadurch gekennzeichnet, dass** der Teilnehmer, der den Dienst anfordert, das vorher festgelegte Format bestimmt.

16. Verfahren nach einem der Ansprüche 10 bis 14, **dadurch gekennzeichnet, dass** die Merkmale des Mobilendgeräts, das den Transkriptionsdienst anfordert, das zuvor festgelegte Format bestimmt.

17. Verfahren nach einem der Ansprüche 10 bis 14, **dadurch gekennzeichnet, dass** das Netzwerk das zuvor festgelegte Format bestimmt.

18. Verfahren nach einem der Ansprüche 10 bis 17, **dadurch gekennzeichnet, dass** es das Senden eines Transkriptionsdienst-Deaktivierungssignal umfasst.

## Revendications

1. Système de transcription en temps réel permettant de transcrire une conversation téléphonique entre des premier et second terminaux mobiles (A, B) dans un réseau de communications, comprenant :
- des moyens (10) destinés à recevoir un signal d'activation pour le service de transcription, en provenance de l'un des deux terminaux mobiles (A, B),
- et, en réaction audit signal d'activation, des moyens (30) pour recevoir un signal vocal conjoint incluant les voix desdits premier et second terminaux mobiles,
- des moyens (30) pour séparer ladite conversation en temps réel et pour obtenir des premier et second signaux vocaux indépendants, en provenance desdits premier et second terminaux mobiles (A, B),
- des moyens (30) pour transcrire lesdits premier et second signaux vocaux en un format pré-établi,
- des moyens (40 ; 50) permettant d'envoyer lesdits premier et second signaux vocaux transcrits vers le terminal mobile (A ou B) qui a demandé le service, de sorte que les signaux vocaux transcrits soient envoyés par l'intermédiaire d'une session de service supplémentaire pour données non structurées (« Unstructured Supplementary Service Data »), USSD, établie par le réseau (P11).

2. Système selon la revendication 1, **caractérisé en ce que** lesdits moyens (10) pour recevoir le signal vocal conjoint sont gérés directement par le terminal mobile (A) demandant le service.

3. Système selon la revendication 1, **caractérisé en ce que** lesdits moyens (10) pour recevoir le signal vocal conjoint sont gérés par un noeud de commande (20) du réseau de téléphonie mobile.

4. Système selon l'une quelconque des revendications précédentes, **caractérisé en ce que** ledit format pré-établi est déterminé par les fonctionnalités techniques du terminal (A) demandant le service de transcription.

5. Système selon l'une quelconque des revendications 1 à 3, **caractérisé en ce que** ledit format pré-établi est déterminé par l'abonné demandant le service.

6. Système selon l'une quelconque des revendications 1 à 3, **caractérisé en ce que** ledit format pré-établi est déterminé par le réseau.

7. Système selon l'une quelconque des revendications précédentes, les moyens (10) destinés à recevoir un signal d'activation pour le service de transcription étant configurés de façon à recevoir un code USSD prédéterminé en tant que signal d'activation pour le service de transcription.

8. Système selon l'une quelconque des revendications 1 à 7, **caractérisé en ce que** lesdits moyens (40 ; 50) permettant d'envoyer lesdits premier et second signaux vocaux transcrits englobent des moyens assurant une connexion avec une passerelle USSD, USSD GW (40), et un registre de localisation nominal (« Home Location Register »), HLR (50), des abonnés.

9. Système selon l'une quelconque des revendications précédentes, **caractérisé en ce qu'**il comporte en outre des moyens (10) destinés à recevoir un signal de désactivation pour le service de transcription.

10. Procédé de transcription en temps réel permettant de transcrire une conversation téléphonique entre des premier et second terminaux mobiles (A, B) dans un réseau de communications, comprenant :
- l'opération consistant à envoyer, par l'un des deux terminaux mobiles, un signal d'activation pour le service de transcription (P1 ; S1),
- et, en réaction audit signal d'activation, la réception d'un signal vocal conjoint incluant les voix desdits premier et second terminaux mobiles (P8 ; S4),
- les opérations consistant à séparer ladite conversation en temps réel et à obtenir des premier et second signaux vocaux indépendants en provenance desdits premier et second terminaux mobiles,
- la transcription desdits premier et second signaux vocaux en un format pré-établi,
- l'envoi desdits premier et second signaux vocaux transcrits vers le terminal mobile (A ou B) qui a demandé le service, de sorte que les signaux vocaux transcrits soient envoyés par l'intermédiaire d'une session de service supplémentaire pour données non structurées (« Unstructured Supplementary Service Data »), USSD, établie par le réseau (P10, P11 ; S7, S8).

11. Procédé selon la revendication 10, **caractérisé en ce que** ledit signal vocal conjoint est géré directement par le terminal mobile qui a demandé le service.

12. Procédé selon la revendication 10, **caractérisé en ce que** ledit signal vocal conjoint est géré par un noeud de commande (20) du réseau de téléphonie mobile.

13. Procédé selon l'une quelconque des revendications 10 à 12, le signal d'activation pour le service de transcription (P1 ; S1) étant un code US SD prédéterminé.

14. Procédé selon l'une quelconque des revendications 10 à 13, **caractérisé en ce qu'**après réception du signal vocal conjoint, incluant les voix desdits premier et second terminaux mobiles, l'abonné demandant le service se distingue grâce à un identifiant pré-établi, et seul le premier ou le second signal vocal, lequel correspond à l'autre terminal mobile (B ou A), est transcrit et envoyé à l'abonné.

15. Procédé selon l'une quelconque des revendications 10 à 14, **caractérisé en ce que** l'abonné demandant le service est celui qui détermine ledit format pré-établi.

16. Procédé selon l'une quelconque des revendications 10 à 14, **caractérisé en ce que** les fonctionnalités du terminal mobile demandant le service de transcription déterminent ledit format pré-établi.

17. Procédé selon l'une quelconque des revendications 10 à 14, **caractérisé en ce que** le réseau détermine ledit format pré-établi.

18. Procédé selon l'une quelconque des revendications 10 à 17, **caractérisé en ce qu'**il inclut l'envoi d'un signal de désactivation pour le service de transcription.
